# EUROPÄISCHE PATENTSCHRIFT

(11) **EP 1 133 401 B1**
(45) Veröffentlichungstag und Bekanntmachung des Hinweises auf die Patenterteilung: **17.12.2003**
(21) Anmeldenummer: 99962142.8
(22) Anmeldetag: 11.11.1999
(51) Int. Cl.: B60J 7/057, B60R 16/00

(54) **BEDIENELEMENT ZUR AUTOMATISCHEN UND MANUELLEN STEUERUNG EINER ELEKTRISCH VERSTELLBAREN KOMPONENTE**
OPERATING ELEMENT FOR AUTOMATICALLY AND MANUALLY CONTROLLING A COMPONENT WHICH CAN BE ELECTRICALLY ADJUSTED
ELEMENT SERVANT A COMMANDER AUTOMATIQUEMENT ET MANUELLEMENT UN COMPOSANT REGLABLE ELECTRIQUEMENT

(30) Priorität: 28.11.1998 DE 19855094
(43) Veröffentlichungstag der Anmeldung: 19.09.2001
(73) Patentinhaber: Volkswagen Aktiengesellschaft, 38436 Wolfsburg (DE)
(72) Erfinder: NESSENIUS, Dirk, D-38533 Vordorf (DE)
(86) Internationale Anmeldenummer: EP9908673
(87) Internationale Veröffentlichungsnummer: WO00032428

(56) Entgegenhaltungen:
- EP-A- 0 785 099
- DE-A- 4 012 399
- DE-A- 4 301 961

## Beschreibung

Die Erfindung betrifft ein Bedienelement zur automatischen und manuellen Steuerung einer verstellbaren Komponente gemäß dem Oberbegriff des Patentanspruchs 1.

Eine solche verstellbare Komponente ist beispielsweise ein elektrischer Fensterheber in einem Kraftfahrzeug. Zur wahlweise Umschaltung zwischen automatischer und manueller Steuerung sind hierfür verschiedene Bedienelemente bekannt.

Aus der gattungsbildenden DE 196 20 235 A1 ist ein Kippschalter bekannt, der federnd in einer Normal- bzw. Nullstellung gelagert und um eine Achse schwenkbar ist. Jeder Schwenkrichtung ist dabei ein Druckpunkt zugeordnet, bei dessen auch nur kurzzeitiger Überschreitung ein das Fenster bewegender Stellantrieb ein Dauersignal erhält und so je nach Schwenkrichtung das Fenster vollständig öffnet bzw. schließt. Wird der Kippschalter zwischen die Normalstellung und dem Druckpunkt bewegt, so wird das Fenster solange nach oben bzw. unten bewegt, solange der Kippsehalter in dieser Position gehalten wird, wodurch eine beliebige Fensterstellung einstellbar ist. Nachteilig an dem bekannten Bedienelement ist, daß dieser Druckpunkt sehr leicht versehentlich überschritten wird, so daß statt einer gewünschten Individualeinstellung das Fenster automatisch in eine Endposition gesteuert wird.

Des weiteren ist als Bedienelement ein Wippschalter bekannt, bei dem durch langes Tippen in eine Richtung das Fenster automatisch geschlossen und langes Tippen in die andere Richtung das Fenster automatisch geöffnet wird. Durch kurzes Antippen in eine Richtung wird das Fenster je nach Richtung schrittweise nach oben oder unten bewegt Nachteilig an dem bekannten Bedienelement ist, daß sich eine gewünschte Zwischenposition durch die schrittweise Bewegung nur schwer bzw. gar nicht einstellen läßt.

Der Erfindung liegt daher das technische Problem zugrunde, ein Bedienelement zur automatischen und manuellen Steuerung einer elektrisch verstellbaren Komponente zu schaffen, mittels derer manuell sehr genau und einfach eine beliebige Stellposition eingestellt werden kann.
Die Lösung des technischen Problems ergibt sich durch die Merkmale des Patentanspruchs 1. Dabei umfaßt das Bedienelement eine Rolle, eine Achse und ein Lager, wobei das Lager oder die Rolle mit einer Kulisse ausgebildet sind, in der die Achse radial bewegbar ist, wobei durch die radiale Bewegung die automatische Steuerung und durch die Drehung der Rolle eine manuelle Verstellung proportional zum Drehwinkel auslösbar ist. Da über die Drehung der Rolle eine stufenlose Verstellung möglich ist, kann sehr einfach eine gewünschte Zwischenposition eingestellt werden. Weitere vorteilhafte Ausgestaltungen der Erfindung ergeben sich aus den Unteransprüchen.

In einer bevorzugten Ausführungsform ist die Achse oder die Rolle federnd gelagert, wobei die Federung der Radialbewegung entgegenwirkt und somit als Rückstelleinrichtung wirkt.

Vorzugsweise ist die Kulisse V-förmig ausgebildet, wobei die Radialbewegung in jeweils einen Schenkel der Kulisse einen Zustand wie "Auf" oder "Zu" automatisch einstellt.

Da von jeder Zwischenposition ohne Drehung der Rolle automatisch in eine Endstellung gesteuert werden kann, ist der Drehwinkel vorzugsweise endlos, so daß nur der jeweils zurückgelegte Drehwinkel ausgewertet werden muß.

Besonders vorteilhaft läßt sich das Bedienelement zur Steuerung eines elektrischen Fensterhebers in einem Kraftfahrzeug einsetzen.

Die Erfindung wird nachfolgend anhand eines bevorzugten Ausführungsbeispiels näher erläutert. Die Fig. zeigen:
- Fig. 1: eine perspektivische Draufsicht auf eine Konsole mit vier Bedienelementen,
- Fig. 2: eine Schnittdarstellung entlang der Schnittlinie A-A und
- Fig. 3: eine Schnittdarstellung entlang der Schnittlinie B-B.

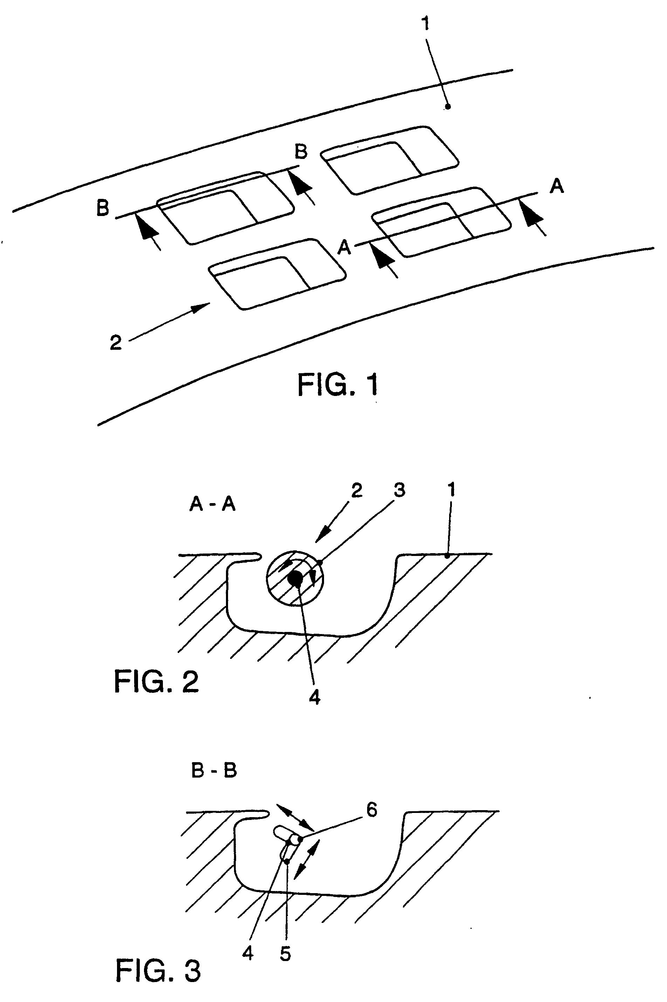

In der Fig. 1 ist eine Konsole 1 eines Kraftfahrzeuges mit vier Bedienelementen 2 eines elektrischen Fensterhebers dargestellt, wobei jedem Bedienelement 2 genau ein Fenster zugeordnet ist. Das Bedienelement 2 umfaßt eine Rolle 3, eine Achse 4 und ein als V-förmige Kulisse ausgebildetes Lager. Die Rolle 3 und die Achse 4 sind fest miteinander verbunden, wobei die Achse 4 federnd oder verschiebbar im Scheitelpunkt 6 der V-förmigen Kulisse 5 drehbar gelagert ist.

Zur manuellen Absenkung bzw. Abhebung des Fensters wird die Rolle 3 gedreht, wobei jeder Drehrichtung der Rolle 3 eine Bewegungsrichtung des Fensters zugeordnet ist, wobei der zurückgelegte Drehwinkel proportional zum Hub der Bewegung des Fensters ist. Dazu muß die mechanische Drehbewegung der Rolle 3 und damit der Achse 4 ein zum Drehpunkt proportionales elektrisches Signal gewandelt werden. Hierzu bieten sich verschiedene Lösungsmöglichkeiten wie Potentiometer oder Drehkondensatoren an. Diese haben jedoch den Nachteil, daß diese mit Anschlag für die beiden Endstellungen ausgebildet sind. Vorzugsweise ist daher der Achse 4 eine Schlitzblende zugeordnet, die durch die Drehung der Achse rotiert. Mittels eines optischen Senders und Empfängers zwischen der Schlitzblende kann dann die Rotation der Achse bzw. Schlitzblende in eine Anzahl von empfangenen Impulsen umgesetzt werden. Durch geeignete Markierungen der Blenden kann dann zusätzlich die Drehrichtung erfaßt werden. Derartige Blenden sind beispielsweise von Computer-Mäusen bekannt. Die Anzahl der erfaßten Impulse kann dann in eine Zeit umgerechnet werden, die der elektrische Motor die Fensterscheibe bewegen soll. Dadurch kann auf Anschläge verzichtet werden, und der Drehwinkel der Rolle 3 ist endlos.

Zur Auflösung der automatischen Steuerung, d.h. um das Fenster vollkommen zu öffnen oder zu schließen, wird die Achse 4 in die Schenkel der V-förmigen Kulisse bewegt. Zur besseren Zuordnung der Bewegung der Rolle 3 mit der Bewegung der Fensterscheibe wird der obere Schenkel dem Schließen des Fensters zugeordnet. Wird nun beispielsweise die Rolle 3 schräg nach links oben angehoben, so schließt sich das Fenster. Entsprechend führt ein Herabdrücken der Rolle 3 zu einem Senken der Fensterscheibe. Die Fensterscheibe folgt also der Bewegung der Rolle 3. Dazu ist in dem Schenkel der Kulisse 5 jeweils ein Schaltelement angeordnet, das die Radialbewegung der Achse 4 in der Kulisse 5 erfaßt und den Motor entsprechend ansteuert. Zur Auslösung des Schalters reicht dabei ein kurzzeitiges Bewegen der Achse 4 in den jeweiligen Schenkel. Wird die Kraft auf die Rolle 3 aufgehoben, so wird die Achse 4 aufgrund der gefederten Lagerung wieder zum Scheitelpunkt 6 zurückgeführt. Durch die V-förmige Ausbildung der Kulisse 5 und die Federbelastung der Achse 4 wird dabei verhindert, daß bei der Drehbewegung der Rolle 3 zur manuellen Steuerung die Achse 4 versehentlich in die Schenkel gedrückt wird und so eine automatische Steuerung auslöst.

Alternativ kann die Kulisse 5 auch in die Rolle 3 integriert werden, wobei dann die Rolle 3 über die Kulisse 5 in ihrer Lage zur Achse 4 veränderbar ist.

Sollte es dennoch während einer Bewegung der Achse 4 in der Kulisse 5 zu einer Drehung der Rolle 3 kommen, so wird diese ignoriert, d.h. die Automatik hat Priorität vor der manuellen Steuerung. Durch die Drehbewegung der Rolle 3 läßt sich das Fenster analog einer bekannten manuellen Fensterkurbel beliebig genau und einfach einstellen, wobei die Einstellgenauigkeit nur durch die Auflösung des Drehwinkels beschränkt ist.

## Patentansprüche

1. Bedienelement (2) zur automatischen und manuellen Steuerung einer elektrisch verstellbaren Komponente, umfassend eine Rolle (3), eine Achse (4) und ein Lager, **dadurch gekennzeichnet, daß** das Lager oder die Rolle (3) mit einer Kulisse (5) ausgebildet sind, in der die Achse (4) radial bewegbar ist, wobei durch die radiale Bewegung die automatische Steuerung und durch Drehung der Rolle (3) eine manuelle Verstellung proportional zum Drehwinkel auslösbar ist.

2. Bedienelement nach Anspruch 1, **dadurch gekennzeichnet, daß** die Achse (4) oder Rolle (3) federnd gelagert ist, wobei die Federung der Radialbewegung entgegengerichtet ist.

3. Bedienelement nach Anspruch 1 oder 3, **dadurch gekennzeichnet, daß** die Kulisse (5) im wesentlichen V-förmig ausgebildet ist.

4. Bedienelement nach einem der vorangegangenen Ansprüche, **dadurch gekennzeichnet, daß** der Drehwinkel der Rolle (3) endlos ist.

5. Bedienelement nach einem der vorangegangenen Ansprüche, **dadurch gekennzeichnet, daß** das Bedienelement (2) zur Steuerung eines elektrischen Fensterhebers in einem Kraftfahrzeug verwendet wird.

## Claims

1. Operator control element (2) for automatically and manually controlling an electrically adjustable component, comprising a roller (3), an axle (4) and a bearing, **characterized in that** the bearing or the roller (3) is formed with a connecting link (5) in which the axle (4) is radially movable, it being possible to trigger the automatic control by means of the radial movement, and to trigger manual adjustment in proportion to the angle of rotation by rotating the roller (3).

2. Operator control element according to Claim 1, **characterized in that** the axle (4) or roller (3) is spring-mounted, the spring-mounting being opposed to the radial movement.

3. Operator control element according to Claim 1 or 3, **characterized in that** the connecting link (5) is of essentially V-shaped construction.

4. Operator control element according to one of the preceding claims, **characterized in that** the angle of rotation of the roller (3) is infinite.

5. Operator control element according to one of the preceding claims, **characterized in that** the operator control element (2) is used to control an electric window lifter in a motor vehicle.

## Revendications

1. Elément de commande (2) pour commander automatiquement et manuellement un composant réglable électriquement, comprenant un galet (3), un axe (4) et un palier, **caractérisé en ce que** le palier ou le galet (3) sont réalisés avec une coulisse (5) dans laquelle l'axe (4) peut se déplacer radialement, le mouvement radial permettant de déclencher la commande automatique et la rotation du galet (3) permettant de déclencher un réglage manuel, de manière proportionnelle à l'angle de rotation.

2. Elément de commande selon la revendication 1, **caractérisé en ce que** l'axe (4) ou le galet (3) est monté à ressort, la force élastique étant opposée au mouvement radial.

3. Elément de commande selon la revendication 1 ou 2, **caractérisé en ce que** la coulisse (5) est réalisée avec une forme essentiellement en V.

4. Elément de commande selon l'une quelconque des revendications précédentes, **caractérisé en ce que** l'angle de rotation du galet (3) est infini.

5. Elément de commande selon l'une quelconque des revendications précédentes, **caractérisé en ce que** l'élément de commande (2) est utilisé pour la commande d'un lève-glace électrique dans un véhicule automobile.
